# EUROPEAN PATENT SPECIFICATION

(11) **EP 2 848 430 B1**
(45) Date of publication and mention of the grant of the patent: **25.04.2018**
(21) Application number: 13787853.4
(22) Date of filing: 22.03.2013
(51) Int. Cl.: B60C 5/00, B60C 5/14, B60C 9/08

(54) **PNEUMATIC TIRE**
LUFTREIFEN
BANDAGE PNEUMATIQUE

(30) Priority: 08.05.2012 JP 2012107040
(43) Date of publication of application: 18.03.2015
(73) Proprietor: The Yokohama Rubber Co., Ltd., Minato-ku Tokyo 105-8685 (JP)
(72) Inventor: SETO, Hideki, Hiratsuka-shi Kanagawa 254-8601 (JP); HASHIMURA, Yoshiaki, Hiratsuka-shi Kanagawa 254-8601 (JP); MATSUDA, Jun, Hiratsuka-shi Kanagawa 254-8601 (JP); ENDO, Toyoaki, Hiratsuka-shi Kanagawa 254-8601 (JP); KOISHIKAWA, Yoshifumi, Hiratsuka-shi Kanagawa 254-8601 (JP); SHIBAI, Takashi, Hiratsuka-shi Kanagawa 254-8601 (JP)
(74) Representative: Dilg, Haeusler, Schindelmann Patentanwaltsgesellschaft mbH
(86) International application number: PCT/JP2013/058344
(87) International publication number: WO 2013/168472

(56) References cited:
- EP-A1- 0 842 793
- EP-A1- 1 842 658
- WO-A1-2006/075550
- JP-A- H1 016 082
- JP-A- S59 216 704
- JP-A- 2006 198 848

## Description

### TECHNICAL FIELD

The present invention relates to a pneumatic tire.

More specifically, the present invention relates to a pneumatic tire with excellent durability that has an inner liner layer formed with an overlap splice at end portions in a tire circumferential direction of a laminated sheet of film whose main component is a thermoplastic resin and tie rubber, and that is capable of preventing the occurrence of cracking of the tie rubber near the splice portion of the laminated sheet, after starting to use the tire.

### BACKGROUND

In recent years, pneumatic tires that use a laminated sheet of film whose main component is a thermoplastic resin and tie rubber as an inner liner layer have been proposed and investigated (Patent Document 1).

Normally, to manufacture a pneumatic tire of this type, the method of manufacturing adopted is to wind in a tire molding drum a laminated sheet of film for an air penetration preventing layer having thermoplastic resin as the main component and a rubber (tie rubber) sheet that is vulcanization bonded to the film whose main component is a thermoplastic resin, form an overlap splice, and then provide it to the tire vulcanization molding process.

However, when a tire is manufactured by drawing out from a roll form and cutting to the required length the laminated sheet made from film with thermoplastic resin as the main component and tie rubber, that is wound in roll form, then winding it onto the tire molding drum and carrying out overlap splicing on the drum, and the like, and then performing vulcanization molding, separation may occur between the film whose main component is thermoplastic resin that constitutes the inner liner, and the tie rubber that is vulcanization bonded to the film, after the tire has started traveling.

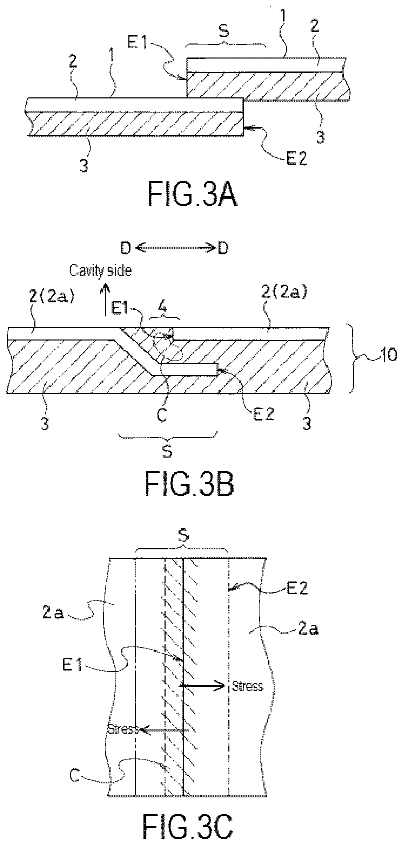

When explained with reference to a drawing, as illustrated in FIG. 3A, a laminated sheet 1 made from film 2 whose main component is thermoplastic resin and tie rubber 3 is cut to the required size (length) with a cutting tool, and an overlap splice is formed by providing a splice portion S at both end portions thereof to form an annular shape on the tire molding drum (not illustrated). When one laminate sheet 1 is used, both end portions are spliced so that an annular shape is formed, or, when a plurality of the laminate sheets 1 is used, the mutual end portions of each are spliced together so that one annular shape is formed.

Next, other parts (not illustrated) required for tire manufacturing are wound and the tire undergoes vulcanization molding with a bladder. After the vulcanization molding, an inner liner layer 10 is formed from the film 2 whose main component is thermoplastic resin and the tie rubber 3, and a portion in which the film 2 whose main component is thermoplastic resin is exposed and a portion in which the film 2 is embedded in the tie rubber are formed near the lap splice portion S as illustrated schematically in FIG. 3B. The film 2 whose main component is thermoplastic resin constitutes an air penetration preventing layer 2a, and on the drawing, the tire cavity side is upward, and the direction indicated by the arrow D is the tire circumferential direction.

FIG. 3C schematically illustrates an air penetration preventing layer and the tie rubber layer near the splice portion of the inner liner illustrated in FIG. 3B. In FIGS. 3A to 3C, E1 and E2 indicate the edge lines at both end portions in the tire circumferential direction of the overlap spliced laminated sheet 1.

Also, after starting to use the tire, cracking phenomena occur in the tie rubber 3, in particular, cracking can easily occur where the film 2 (air penetration preventing layer 2a) whose main component is thermoplastic resin is exposed and near the tip portion 4 thereof, and the like, as illustrated in FIG. 3B.

The cause of this cracking, in particular, the cause of the occurrence of cracking (at the interface) between the film 2 (air penetration preventing layer 2a) whose main component is thermoplastic resin and the tie rubber 3 is considered to be because normally the film 2 (air penetration preventing layer 2a) whose main component is thermoplastic resin has high rigidity, so the tie rubber that is sandwiched by the film 2 (air penetration preventing layer 2a) on top and bottom is fixed and straining is suppressed, but near the tip portion 4 of the film 2 where it is not sandwiched by the film 2 (air penetration preventing layer 2a) on top and bottom, straining is not suppressed, so large stresses occur. Also, it is considered that, in some cases, the vulcanization adhesive strength between the film whose main component is thermoplastic resin and the tie rubber layer is not sufficiently high.

On the other hand, if the vulcanization adhesive strength between the film 2 whose main component is thermoplastic resin and the tie rubber is sufficiently high, stress and strain is concentrated within the tie rubber 3 near the location indicated by C in FIG. 3B, so cracking frequently occurs. These stresses and strains concentrate near the location indicated by C in FIG. 3B where the tie rubber is exposed on the surface, and, in this portion in the tie rubber layer 3, stresses and strains are produced whose strain direction is the tire circumferential direction, and this causes cracking to occur near C in the tie rubber layer (the direction of stress is indicated on FIG. 3C).

### PRIOR ART DOCUMENT

### Patent Document

Patent Document 1: Japanese Unexamined Patent Application Publication No. 2009-241855A.

Document JP10016082A discloses a pneumatic tire according to the preamble of claim 1.

### SUMMARY OF THE INVENTION

### Problems to be Solved by the Invention

With the foregoing in view, it is an object of the present invention to provide a pneumatic tire with excellent durability that has an inner liner layer formed from a laminate made from film whose main component is a thermoplastic resin and tie rubber, and that is capable of preventing the occurrence of cracking of the film or the tie rubber near the splice portion of the laminated sheet, after starting to use the tire.

### Means to Solve the Problem

A pneumatic tire of the present invention that achieves the aforementioned object has a configuration as described in the following (1). (1) A pneumatic tire has an inner liner layer formed with an overlap splice at end portions in the tire circumferential direction of a laminated sheet in which a film whose main component is thermoplastic resin and tie rubber are laminated, wherein a laminated sheet with at least one of the end portions in the tire circumferential direction having an edge line formed from straight lines continuously in the tire width direction exhibiting a zigzag shape of a triangular wave form is used as the overlap spliced laminated sheet.

Furthermore, it is preferable that this pneumatic tire of the present invention is configured from any of configurations (2) to (7) below.
(2) The pneumatic tire according to (1) above, wherein the triangular wave form that exhibits the zigzag shape has a line symmetry shape in plan view with a straight line that passes through an apex of the triangular wave form and parallel to the tire circumferential direction as the line of symmetry.
(3) The pneumatic tire according to (1) above, wherein the triangular wave form that exhibits the zigzag shape has a non-line symmetry shape in plan view with a straight line that passes through an apex of the triangular wave form and parallel to the tire circumferential direction as the line of symmetry.
(4) The pneumatic tire according to (3) above, wherein the triangular wave form that exhibits the zigzag shape has a shape in which one side of the triangular wave form is parallel to the tire circumferential direction in plan view.
(5) The pneumatic tire according to any one of (1) to (4) above, wherein both end portions of the overlap spliced laminated sheet have edge lines formed from straight lines continuously in the tire width direction exhibiting the zigzag shape of a triangular wave form.
(6) The pneumatic tire according to any one of (1) to (5) above, wherein the length of the overlap in the tire circumferential direction of the overlap splice is not less than 5 mm at the portion where the length is the minimum.
(7) The pneumatic tire according to any one of (1) to (6) above, wherein edge lines formed from straight lines continuously in the tire width direction exhibiting the zigzag shape of a triangular wave form are formed from a process using laser light.

### Effect of the invention

According to the pneumatic tire of the present invention according to claim 1 as described above, it is possible to provide a pneumatic tire with excellent durability having an inner liner layer formed with an overlap splice at end portions in the tire circumferential direction of a laminated sheet of film whose main component is a thermoplastic resin and tie rubber, and that is capable of preventing the occurrence of cracking of the tie rubber near the splice portion of the laminated sheet, after starting to use the tire.

According to the pneumatic tire of the present invention according to any of claims 2 to 7, it is possible to obtain the effect of the present invention according to claim 1, and in addition, to obtain the effect more reliably and to a greater extent.

### BRIEF DESCRIPTION OF THE DRAWINGS

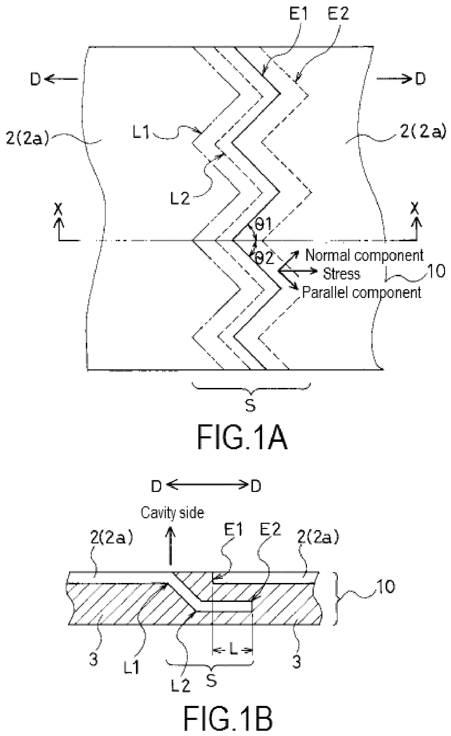

- FIG. 1A: is a plan view schematically illustrating one example of a form of an air penetration preventing layer and a tie rubber layer near a splice portion of an inner liner layer in a pneumatic tire according to the present invention, and FIG. 1B is a cross-sectional view at X-X in FIG. 1A. FIG. 1 illustrates an example in which when both end portions of a laminated sheet of the air penetration preventing layer and the tie rubber layer are lap spliced, both end portions of the laminated sheet having edge lines formed from straight lines continuously in the tire width direction exhibiting a zigzag shape of a triangular wave form is used as the laminated sheet.

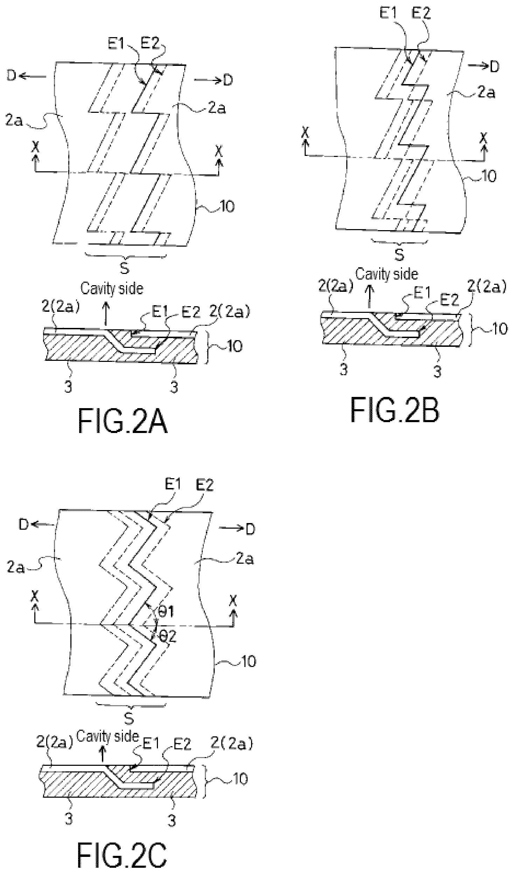

- FIGS. 2A to 2C: are each schematic views illustrating other examples of embodiments of the air penetration preventing layer and tie rubber layer near the splice portion of the inner liner layer in the pneumatic tire according to the present invention, and in each of FIGS. 2A to 2C, a plan view is illustrated on top and a cross-sectional view at X-X is illustrated on the bottom.
- FIGS. 3A to 3C: are explanatory views of the problems in conventional technology, FIG. 3A is a schematic view illustrating the laminated sheet in which the film whose main component is thermoplastic resin and the tie rubber which is vulcanization bonded to the film whose main component is thermoplastic resin are laminated is cut to the required length, wound around the tire molding drum, and both end portions of the laminated sheet are overlap spliced, FIG. 3B is a schematic view illustrating the form depicted in FIG. 3A after vulcanization molding processing of the tire, and FIG. 3C is a plan view near the splice portion.

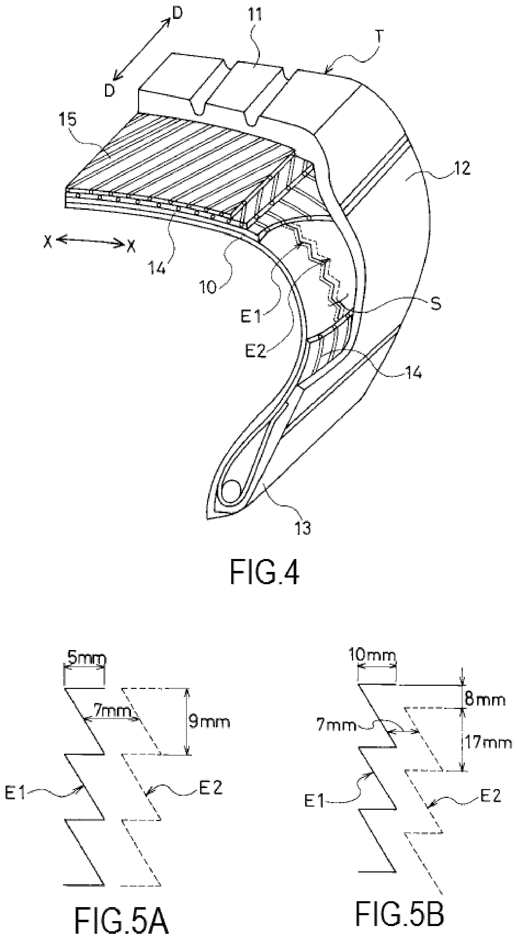

- FIG. 4: is a partially fragmented perspective view illustrating an example of an aspect of the pneumatic tire according to the present invention.
- FIG. 5: is a schematic view describing the triangular wave form adopted in Working Example 3 and Working Example 4.

### BEST MODE FOR CARRYING OUT THE INVENTION

A detailed explanation of the pneumatic tire of the present invention will be given below while referencing the drawings.

As illustrated in FIGS. 1A and 1B, the pneumatic tire according to the present invention is a pneumatic tire having an inner liner layer is formed with an overlap splice at end portions in the tire circumferential direction of a laminated sheet in which a film 2 (air penetration preventing layer 2a) whose main component is thermoplastic resin and tie rubber 3 are laminated, in which a laminated sheet with at least one of the end portions E1, E2 in the tire circumferential direction having an edge line formed from straight lines L1, L2 continuously in the tire width direction exhibiting a zigzag shape of a triangular wave form is used as the overlap spliced laminated sheet.

In other words, L1, L2 are bent continuous straight lines. In FIG. 1, an example of both end portions E1, E2 in the tire circumferential direction having edge lines formed from straight lines L1, L2 continuously in the tire width direction exhibiting the zigzag shape of a triangular wave form is illustrated, but just one of the end portions E1, E2 in the tire circumferential direction may be straight lines continuously in the tire width direction exhibiting the zigzag shape of a triangular wave form. When just one is a bent continuous straight line, the other edge line may be a straight line as illustrated in FIG. 3C, a curved line shape of a plurality of connected circular arcs, a straight line continuous straight line shape exhibiting a zigzag shape having a portion thereof parallel to the tire width direction, or a combination of these. This is because even if only one of the edge lines is the bent continuous straight line as described above, the effect of the present invention can be obtained.

In the present invention, in particular, by using the overlap spliced laminated sheet 1 with the zigzag edge line of a triangular wave form as described above, at each location near the splice portion, stresses applied in the tire circumferential direction can be dispersed so that they are applied in directions other than the circumferential component, and the positions of occurrence of stresses that are concentrated on virtually a straight line in the width direction of the center of the splice portion can be dispersed, and these act synergistically to exhibit the significant effect of suppressing the occurrence of cracking.

The state of dispersion of stress is illustrated schematically in FIG. 1A. The stress acting in the tire circumferential direction at each location in the splice portion is dispersed into a component normal to the edge lines E1, E2 of the end portions, and a parallel component. In contrast, when the edge line is a straight line normal to the tire circumferential direction, the stress cannot be dispersed in directions other than the circumferential direction, so the stress acts only in the tire circumferential direction, and its magnitude is large (FIG. 3C).

In the present invention, "the end portions in the tire circumferential direction have edge lines formed from straight lines continuously in the tire width direction exhibiting the zigzag shape of a triangular wave form" means that the edge lines E1, E2 have the zigzag shape of a triangular wave form as illustrated in FIG. 1A, and in the "zigzag shape" part, the edge lines E1, E2 at least do not include a line parallel to the tire width direction (in other words, "the tire radial direction") as a part thereof. In other words, in the present invention, an edge line parallel to the tire width direction (the tire radial direction) as illustrated in FIG. 3C is not included in the portion exhibiting the zigzag shape. This is because if there is an edge line portion parallel to the tire width direction (tire radial direction), the stress dispersion effect as described above cannot be sufficiently obtained.

Also, "zigzag shape of a triangular wave form is formed from a continuous straight line" means that "edge lines of wave forms are formed from continuously curving lines" is excluded, and in the case of "edge lines of wave forms formed from continuously curving lines", at a portion thereof, there is normally a portion with the same effect as "an edge line portion parallel to the tire width direction (tire radial direction) is had", and there is a possibility that, at that portion, the stress dispersion effect of the present invention cannot be sufficiently obtained, and that portion could be the point of occurrence of cracking, so they are excluded.

In FIG. 1, the edge lines E1, E2 clearly "form zigzag shapes of a triangular wave form with continuous straight lines", but portions that are not edge lines, for example, the lines L1, L2 in FIG. 1A that exhibit bends, are drawn as straight lines on the drawings but they may have a portion that is a curved portion.

As illustrated in FIG. 1A, the zigzag shape of a triangular wave form may have in plan view a line symmetry shape with a straight line that passes through the apex of the triangular wave form and parallel to the tire circumferential direction as the line of symmetry. In this case, it is possible to obtain a virtually uniform stress dispersion effect in the tire width direction and circumferential direction. FIG. 1A illustrates a case in which the inclination angles θ1, θ2 to the tire circumferential direction D-D of the edge lines E1, E2 are each 45°.

Alternatively, the triangular wave form having the zigzag shape may have in plan view a non-line symmetry shape with a straight line that passes through the apex of the triangular wave form and parallel to the tire circumferential direction as the line of symmetry. FIGS. 2A to 2C each illustrate examples of this case, FIGS. 2A and 2B illustrate a saw-tooth shape, with the inclination angle θ2 to the tire circumferential direction D-D of the edge lines E1, E2 equal to 0° (the triangular wave form exhibits a right angled triangular wave form). Also, FIG. 2C illustrates a case in which the inclination angle θ1 is 60° and θ2 is 30° (in this case, also the triangular wave form is a right angled triangular wave form). The difference between FIGS. 2A and 2B is that the positions in the tire width direction of the apexes of the triangular wave form are the same for both end portions (FIG. 2A) or are different (FIG. 2B). In the case that the triangular wave forms exhibiting zigzag shapes as illustrated in FIGS. 2A to 2C in plan view have a shape of non-line symmetry with the straight line passing through the apex of the triangular wave form and parallel to the tire circumferential direction as the line of symmetry, it is possible to obtain a stress dispersion effect with a certain amount of distribution in the tire width direction and circumferential direction.

An edge line forming the zigzag shape of a triangular wave form from continuous bent straight lines may be formed at one of the end portions of the spliced laminated sheet, but preferably both end portions are formed with an overlap splice.

Preferably, the length of the overlap in the tire circumferential direction of the overlap splice portion (the overlap splice length L (FIG. 1)) is at least 5 mm at the minimum portion, and more preferably is from 7 to 30 mm. When the length is less than 5 mm, the effect of the overlap splice is poor, and when it is longer than 30 mm, there are tire uniformity problems which are not desirable.

The height of the triangular wave form, the pitch at which the triangular wave form is formed, and the like vary depending on the tire size, but normally the height of the triangular wave form (the length in the tire circumferential direction) is preferably from 3 to 15 mm, and preferably the pitch at which the triangular wave form is formed is from 5 to 60 mm.

The inclination angle θ1 and the inclination angle θ2 are defined by the pitch at which the triangular wave form is formed, but preferably the former θ1 is in the range from 0 to 75°, and the latter θ2 is in the range from 0 to 75°, and the sum of both angles is in the range from 60 to 150°. If the pitch at which the triangular wave form is formed is too large, or if the inclination angle θ1 or the inclination angle θ2 is too large, the effect of the present invention becomes poor.

Preferably, the thickness of the film 2 whose main component is thermoplastic resin from which the laminated sheet used in the present invention is constituted is in the range from 30 to 300 µm, and preferably, tie rubber with a sheet thickness of 0.3 to 1.5 mm is used.

The process of forming the triangular wave form can be performed by using a laser process to cut in the tire width direction the end portions in the tire circumferential direction of the laminated sheet after laminating the film and the tie rubber, or the like. The cutting process uses irradiation with laser light, so preferably the laser light irradiates the laminated sheet surface from the direction normal thereto and moves in the planar direction of the laminated sheet while forming the triangular wave form. Irradiation of the laser light may be performed continuously while moving or may be performed intermittently while moving. It is preferable to use an infrared laser or a CO₂ (carbon dioxide gas) laser as the laser light, and among these, using the CO₂ (carbon dioxide gas) laser is preferable in favorability of workability, controllability, and the like. While it seems to be depending on a material of the film sheet material, a YAG laser may be often inferior to those above in terms of workability and controllability.

FIG. 4 is a partially fragmented perspective view illustrating an example of an aspect of the pneumatic tire according to the present invention.

A pneumatic tire T is provided with side wall portions 12 and bead portions 13 so as to communicate on the left and right with a tread portion 11. On the tire inner side thereof, a carcass layer 14 that acts as a framework for the tire is provided so as to extend between the left and right bead portions 13, 13 in the tire width direction. Two belt layers 15 composed of steel cords are provided on the outer circumferential side of the carcass layer 14 corresponding to the tread portion 11. The arrow X indicates the tire width direction, and the arrow D indicates the tire circumferential direction. An inner liner layer 10 is disposed on the inner side of the carcass layer 14, and the splice portion S thereof extends in the tire width direction.

In the pneumatic tire according to the present invention, the occurrence of cracks that often occur conventionally near the splice portion S on the tire inner circumferential surface, and the occurrence of cracks between the tie rubber layer 3 and the sheet 2 whose main component is thermoplastic resin that form the inner liner layer 10 are suppressed and durability is significantly improved.

The overlap splice portion S extends over the whole width of the tire, but it is not necessary to use the edge line with the triangular wave form over the whole tire width of the splice portion, in particular, preferably it is provided at least in the region between the end of the belt with the greater width and the tip of the bead filler in the tire width direction. During driving, cracking and peeling easily occurs in the film and tie rubber near the shoulder portions where the deformation is large, so preferably it is provided at least in the region as described above, including the side wall portions.

In the present invention, "the film whose main component is thermoplastic resin" which is one of the constituents of the inner liner is typically film made from "thermoplastic resin", or is a generic term for film made from "a thermoplastic elastomer composition with elastomers blended into the resin while maintaining thermoplastic resin as the main component". Even in the latter case, also the main component is thermoplastic resin, and film whose main component is thermoplastic resin has the characteristic that normally its rigidity is large compared with sheet made from 100% rubber or the like. As a result, in the configuration of the present invention as described above, protecting the inner liner near the splice portion is important for increasing the life of the pneumatic tire.

The thermoplastic resin and elastomer that can be used in the present invention will be described below.

The thermoplastic resin to be used in the present invention is preferably a polyamide resin, [e.g., nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 9T, nylon 6/6T copolymer, nylon 66/PP copolymer, nylon 66/PPS copolymer] and an N-alkoxyalkyl compound thereof, e.g., a methoxymethyl compound of nylon 6, a methoxymethyl compound of a nylon 6/610 copolymer, or a methoxymethyl compound of nylon 612; a polyester resin [e.g., an aromatic polyester such as polybutylene terephthalate (PBT), polyethylene terephthalate (PET), polyethylene isophthalate (PEI), a PET/PEI copolymer, polyarylate (PAR), polybutylene naphthalate (PBN), a crystal polyester, a polyoxyalkylene diimide acid/polybutylene terephthalate copolymer]; a polynitrile resin [e.g., polyacrylonitrile (PAN), polymethacrylonitrile, an acrylonitrile/styrene copolymer (AS), a (meta)acrylonitrile/styrene copolymer, a (meta)acrylonitrile/styrene/butadiene copolymer], a polymethacrylate resin [e.g., polymethyl-methacrylate (PMMA), polyethyl-methacrylic acid], a polyvinyl resin [e.g., polyvinyl acetate, a polyvinyl alcohol (PVA), a vinyl alcohol/ethylene copolymer (EVOH), polyvinylidene chloride (PVDC), polyvinylchloride (PVC), a vinyl chloride/vinylidene chloride copolymer, a vinylidene chloride/methylacrylate copolymer, a vinylidene chloride/acrylonitrile copolymer (ETFE)], a cellulose resin [e.g., cellulose acetate, cellulose acetate butyrate], a fluoride resin [e.g., polyvinylidene difluoride (PVDF), polyvinyl fluoride (PVF), polychlorofluoroethylene (PCTFE), a tetrafluoroethylene/ethylene copolymer], or an imide resin
[e.g., an aromatic polyimide (PI)].

Furthermore, with the thermoplastic resin and the elastomer that configure the thermoplastic elastomer composition that can be used in the present invention, the above may be used as the thermoplastic resin. The elastomer to be used desirably includes a diene-based rubber and a hydrogenate thereof
[e.g., natural rubber (NR), isoprene rubber (IR), epoxidized natural rubber, styrene butadiene rubber (SBR), butadiene rubber (BR, high cis-BR, low cis-BR), nitrile rubber (NBR), hydrogenated NBR, hydrogenated SBR], an olefin rubber [e.g., ethylene propylene rubber (EPDM, EPM), maleic acid ethylene propylene rubber (M-EPM), butyl rubber (IIR), an isobutylene and aromatic vinyl or diene-based monomer copolymer, acrylic rubber (ACM), an ionomer], a halogen-containing rubber [e.g., Br-IIR, CI-IIR, a brominated isobutylene-p-methylstyrene copolymer (BIMS), chloroprene rubber (CR), a hydrin rubber (CHR), chlorosulfonated polyethylene rubber (CSM), chlorinated polyethylene rubber (CM), chlorinated polyethylene rubber modified with maleic acid (M-CM)], a silicon rubber [e.g., methyl vinyl silicon rubber, dimethyl silicon rubber, methylphenyl vinyl silicon rubber], a sulfur-containing rubber
[e.g., polysulfide rubber], a fluororubber [e.g., a vinylidene fluoride rubber, a vinyl ether rubber containing fluoride, a tetrafluoroethylene-propylene rubber, a silicon-based rubber containing fluoride, a phosphazene rubber containing fluoride], and a thermoplastic elastomer [e.g., a styrene elastomer, an olefin elastomer, an ester elastomer, a urethane elastomer, a polyamide elastomer].

In particular, 50% by weight or more of the elastomer is preferably halogenated butyl rubber, brominated isobutylene-p-methylstyrene copolymer rubber, or maleic anhydride modified ethylene α-olefin copolymer rubber in being able to increase a rubber volume ratio and soften and ruggedize from a low temperature to a high temperature.

Furthermore, 50% by weight or more of the thermoplastic resin in the thermoplastic elastomer composition is preferably nylon 11, nylon 12, nylon 6, nylon 6, nylon 66, a nylon 6/66 copolymer, a nylon 6/12 copolymer, a nylon 6/10 copolymer, a nylon 4/6 copolymer, a nylon 6/66/12 copolymer, an aromatic nylon, or an ethylene / vinyl alcohol copolymer in being able to achieve both air permeation prevention and durability.

Furthermore, when obtaining the blend by blending a combination of the specified thermoplastic resin described above and the specified elastomer described above, in a situation where compatibilities differ, both the thermoplastic resin and the elastomer can be made compatible by using an appropriate compatibility agent as a third component. By mixing the compatibility agent in the blend, interfacial tension between the thermoplastic resin and the elastomer is reduced, and as a result, the particle diameter of the elastomer that forms the dispersion phase becomes very small and thus the characteristics of both components may be realized effectively. This type of compatibility agent may generally have a structure of a copolymer having a structure of one or both of the thermoplastic resin and the elastomer, or a copolymer having an epoxy group, a carbonyl group, a halogen group, an amino group, an oxazoline group, and/or a hydroxy group or the like that is able to react with the thermoplastic resin or the elastomer. While the type of compatibility agent may be selected according to the type of thermoplastic resin and elastomer to be blended, such a compatibility agent generally includes: a styrene/ethylene butylene block copolymer (SEBS) or a maleic acid modified compound thereof; a EPDM, EPM, EPDM/styrene or EPDM/acrylonitrile graft copolymer or a maleic acid modified compound thereof; a styrene/maleic acid copolymer, or a reactive phenoxy, and the like. The blending quantity of such a compatibility agent, while not being limited, is preferably from 0.5 to 10 parts by weight per 100 parts by weight of the polymer component (total of the thermoplastic resin and the elastomer).

In the thermoplastic elastomer composition where the thermoplastic resin and the elastomer are blended, a composition ratio between the specified thermoplastic resin and elastomer is not limited in particular, is favorable if suitably decided so as to assume a structure where the elastomer is disposed as a discontinuous phase in a matrix of the thermoplastic resin, and a preferable range is a weight ratio of 90/10 to 30/70.

In the present invention, another polymer, such as the compatibility agent, can be mixed in with the thermoplastic elastomer composition that includes the thermoplastic resin or the blend that blends the thermoplastic resin and the elastomer in a range that does not impair a necessary characteristic as the inner liner. Objects of mixing in the other polymer are improving compatibility between the thermoplastic resin and the elastomer, making molding workability of the material favorable, improving heat resistance, reducing costs, and the like, and as a material used for these objects, for example, polyethylene (PE), polypropylene (PP), polystyrene (PS), ABS, SBS, polycarbonate (PC), and the like can be illustrated.

Furthermore, a reinforcing agent such as a filler (calcium carbonate, titanium oxide, alumina), carbon black, or white carbon, a softening agent, a plasticizer, a processing aid, a pigment, a dye, or an anti-aging agent generally compounded with polymer compounds may be optionally compounded so long as the characteristics required for an inner liner are not harmed. The thermoplastic elastomer composition assumes the structure where the elastomer is dispersed as the discontinuous phase in the matrix of the thermoplastic resin. By assuming this structure, a sufficient flexibility and, by an effect of a resin layer as a continuous phase, sufficient air permeation prevention can be imparted to the inner liner, and during molding, independent of an amount of the elastomer, molding workability equivalent to the thermoplastic resin can be obtained.

Furthermore, the elastomer can be dynamically vulcanized when being mixed in with the thermoplastic resin. A vulcanizer, a vulcanization assistant, vulcanization conditions (temperature, time), and the like, during the dynamic vulcanization can be determined as appropriate in accordance with the composition of the elastomer to be added, and are not particularly limited.

When the elastomer in the thermoplastic elastomer composition is dynamically vulcanized in this manner, the obtained resin film sheet becomes a sheet that includes a vulcanized elastomer; therefore, this sheet is preferable in that it has resistance (elasticity) against deformation from the outside, in particular it easily maintains the structure of the triangular wave form edge lines, and it can reliably obtain the effects of the present invention.

Generally available rubber vulcanizers (crosslinking agents) can be used as the vulcanization agent. Specifically, as a sulfur-based vulcanizer, powdered sulfur, precipitated sulfur, highly dispersible sulfur, surface treated sulfur, insoluble sulfur, dimorpholine disulfide, alkylphenol disulfide, and the like can be illustrated, and, for example, about 0.5 to 4 phr (in the present specification, "phr" refers to parts by weight per 100 parts per weight of an elastomer component; same below) can be used.

Moreover, examples of an organic peroxide-based vulcanizer include benzoyl peroxide, t-butyl hydroperoxide, 2,4-dichlorobenzoyl peroxide, 2,5-dimethyl-2,5-di(t-butyl peroxy)hexane, and 2,5-dimethylhexane-2,5-di(peroxyl benzoate). Such an organic peroxide-based vulcanizer can be used in an amount of, for example, approximately 1 to 20 phr.

Furthermore, examples of a phenol resin-based vulcanizer includes brominated alkylphenol resins and mixed crosslinking system containing an alkyl phenol resin with a halogen donor such as tin chloride and chloroprene. Such a phenol resin-based vulcanizer can be used in an amount of, for example, approximately 1 to 20 phr.

As other examples, flowers of zinc (about 5 phr); magnesium oxide (about 4 phr); litharge (about 10 to 20 phr); p-quinone dioxime, p-dibenzoyl quinone dioxime, tetrachloro-p-benzoquinone, poly-p-dinitrosobenzene (about 2 to 10 phr); and methylenedianiline (about 0.2 to 10 phr) can be illustrated.

As necessary, a vulcanization accelerator may be added. As the vulcanization accelerator, about 0.5 to 2 phr, for example, of a generally available vulcanization accelerator of an aldehyde-ammonia base, a guanidine base, a thiazole base, a sulfenamide base, a thiuram base, a dithio acid salt base, a thiourea base, or the like can be used.

Specific examples include an aldehyde ammonia vulcanization accelerator such as hexamethylene tetramine and the like; a guanidine vulcanization accelerator such as diphenyl guanidine and the like; a thiazole vulcanization accelerator such as dibenzothiazyl disulfide (DM), 2-mercaptobenzothiazole and its Zn salt; a cyclohexylamine salt, and the like; a sulfenamide vulcanization accelerator such as cyclohexyl benzothiazyl sulfenamide (CBS), N-oxydiethylene benzothiazyl-2-sulfenamide, N-t-butyl-2-benzothiazole sulfenamide, 2-(thymol polynyl dithio)benzothizole, and the like; a thiuram vulcanization accelerator such as tetramethylthiuram disulfide (TMTD), tetraethylthiuram disulfide, tetramethylthiuram monosulfide (TMTM), dipentamethylenethiuram tetrasulfide, and the like; a dithionate vulcanization accelerator such as Zn-dimethyl dithiocarbamate, Zn-diethyl dithiocarbamate, Zn-n-butyl dithiocarbamate, Zn-ethylphenyl dithiocarbamate, Te-diethyl dithiocarbamate, Cu-dimethyl dithiocarbamate, Fe-dimethyl dithiocarbamate, pipecoline pipecolyl dithiocarbamate, and the like; and a thiourea vulcanization accelerator such as ethylene thiourea, diethyl thiourea, and the like may be mentioned. Additionally, a vulcanization accelerator assistant which is generally-used for a rubber can be used. For example, zinc white (approximately 5 phr), stearic acid, oleic acid and their Zn salts (approximately 2 to 4 phr), or the like can be used.

The method for producing the thermoplastic elastomer composition is as follows. The thermoplastic resin and the elastomer (unvulcanized one in the case of rubber) are melt-kneaded in advance by a bi-axial kneader/extruder or the like. The elastomer is dispersed as a dispersion phase (domain) in the thermoplastic resin forming a continuous phase (matrix). When the elastomer is vulcanized, the vulcanizer can be added during the kneading process to dynamically vulcanize the elastomer. Although the various compounding agents (except for vulcanizer) may be added to the thermoplastic resin or the elastomer during the kneading process, it is preferable to premix the compounding agents before the kneading process. The kneader used for kneading the thermoplastic resin and the elastomer is not particularly limited. A screw extruder, kneader, Banbury Mixer, bi-axial kneader/extruder, or the like can be used as the kneader. Among these, a bi-axial kneader/extruder is preferably used for kneading the thermoplastic resin and the elastomer and for dynamically vulcanizing the elastomer. Furthermore, two or more types of kneaders can be used to successively knead the thermoplastic resin and the elastomer component. As a condition for the melt kneading, it is preferable that a temperature should equal to or higher than a melting temperature of the thermoplastic resin. Furthermore, a maximum shearing speed during the kneading process is preferably from 300 to 7,500 sec⁻¹. A total kneading time is from 30 seconds to 10 minutes. Additionally, when a vulcanizing agent is added, a vulcanization time after said addition is preferably from 15 seconds to 5 minutes. The polymer composition produced by the above method may be formed into a desired shape by a generally-used method for forming a thermoplastic resin such as injection molding and extrusion molding.

The thermoplastic elastomer composition thus obtained has a structure in which the elastomer is dispersed as a discontinuous phase in the matrix of the thermoplastic resin. By adopting this structure, by the sufficient flexibility and the effect of the resin layer as the continuous phase, sufficient air penetration prevention and strength can be imparted as the inner liner, and during molding, independent of the amount of the elastomer, molding workability equivalent to the thermoplastic resin can be obtained.

The Young's moduli of the thermoplastic resin and the thermoplastic elastomer composition are not particularly limited, but are preferably set to 1 to 500 MPa, and more preferably 25 to 250 MPa.

### EXAM PLES

The pneumatic tire of the present invention will be specifically described below by working examples and the like.

The method of measuring each evaluation property was as described below.
(1) Evaluation of the Cracking Resistance of the Splice Portion:
   A driving test was carried out using a drum test machine with an inner pressure of 120 kPa, load of 7.24 kN, and speed of 81 km/h for 80 hours, then the status of cracking (number of occurrences, size) of the tire rubber near the splice portion of the inner liner layer of the cavity of each of the test tires (in each working example and conventional example, 10 tires each) was observed and evaluated. The evaluation was expressed as an index with Conventional Example 1 as 100, and the larger the value the better the evaluation.
(2) Evaluation of Uniformity:
   The evaluation was carried out by measuring the RFV in accordance with JASO C-607-87. The number n was 10, and their average value was expressed as an index with Conventional Example 1 as 100. The larger the number, the better the uniformity. If the number was 2% or more, the evaluation was "Superior", and if it was 5% or more, the evaluation was "Significantly superior".

Working Examples 1 to 4, Conventional Example 1, and Comparative Examples 1 to 3
Ten test tires of tire size 195/65R15 91H (15x6J) having a belt two-layer and carcass two-layer structure were produced as the test tires for each of Working Examples 1 to 4, Conventional Example 1, and Comparative Examples 1 to 3.

When producing each test tire, N6/N66 was used as the thermoplastic resin and brominated isobutylene-p-methylstyrene copolymer (BIMS) was used as the elastomer in the film whose main component was thermoplastic resin that formed the air penetration preventing layer of the inner liner, these were blended to obtain a film of thickness 130 µm, and a tie rubber sheet of thickness 0.7 mm with the composition shown in Table 1 was laminated to this film to produce the laminated sheet for use in the inner liner layer.

**[Table 1]**

| | | Parts by mass |
|---|---|---|
| Styrene butadiene rubber | "Nipol 1502" manufactured by Zeon Corporation | 50 |
| Natural rubber | SIR-20 | 50 |
| Carbon black | "Seast V" manufactured by Tokai Carbon Co., Ltd. | 60 |
| Stearic acid | Industrial stearic acid | 1 |
| Aromatic oil | "Desolex No. 3" manufactured by Showa Shell Sekiyu K.K. | 7 |
| Zinc oxide | "Aenhana No. 3" manufactured by Seido Chemical Industry Co., Ltd. | 3 |
| Modified resorcin formaldehyde condensate | "Sumikanol 620" manufactured by Taoka Chemical Co., Ltd. | 2 |
| Methylene donor | Modified etherified methylolmelamine ("Sumikanol 507AP" manufactured by Taoka Chemical Co., Ltd.) | 6 |
| Sulfur | 5% oil-extension treated sulfur | 6 |
| Vulcanization accelerator | Di-2-benzothiazolyl disulfide "NOCCELER-DM" manufactured by Ouchi Shinko Chemical Industrial Co., Ltd. | 2.2 |

The end portions in the tire circumferential direction of the laminated sheet were formed as described below for each of Working Examples 1 to 4, Conventional Example 1, and Comparative Example 1.

In Working Example 1 and Working Example 2, the edge lines E1, E2 were as illustrated in FIG. 1A (θ1, θ2 were each 45°, so the apex angle was 90° to give an isoscles triangular wave form with line symmetry), and the height of the triangular form was 5 mm in Working Example 1 and 10 mm in Working Example 2.

In Working Example 3, the edge lines E1, E2 were as illustrated in FIG. 2A (θ1 was 60°, θ2 was 0°, so the apex angle was 60° to give a right angled triangular wave form with non-line symmetry), the height of the triangular wave form was 5 mm, the overlap length L was 7 mm, the length of the bottom side of the triangular form was 9 mm (the form is illustrated in FIG. 5A), and the wave form phase of both end portions coincided.

In Working Example 4, the edge lines E1, E2 were as illustrated in FIG. 2B (θ1 was 60°, θ2 was 0°, so the apex angle was 60° to give a right angled triangular wave form with non-line symmetry), the height of the triangular wave form was 10 mm, the overlap length L was 7 mm, the length of the bottom side of the triangular form was 17 mm (the form is illustrated in FIG. 5B), and the wave form phases of both end portions were offset by 8 mm.

In Conventional Example 1, the edge lines E1, E2 had a straight line form in the tire width direction as illustrated in FIG. 3.

Comparative Example 1 had a continuously curving wave form with wave form height of 5 mm (the width of one wave form was 10 mm).

In each case, the overlap length was 7 mm.

The cracking resistance evaluation results and the uniformity evaluation results of the splice portions in each of the test tires are shown in Table2.

**[Table 2]**

| | Conventional Example 1 | Working Example 1 | Working Example 2 | Working Example 3 | Working Example 4 | Comparative Example |
|---|---|---|---|---|---|---|
| Shape of the edge lines E1, E2 | Straig ht line | FIG. 1A | FIG. 1A | FIG. 2A | FIG. 2B | Curve d wave line |
| Inclination angleθ1 (°) | - | 45° | 45° | 60° | 60° | - |
| Inclination angleθ2 (°) | - | 45° | 45° | 0° | 0° | - |
| Apex angle (°) | - | 90° | 90° | 60° | 60° | - |
| Height of triangle (mm) | - | 5 mm | 10 mm | 5 mm | 10 mm | 5 mm (wave height) |
| Wave form pitch | - | 10 mm | 20 mm | 9 mm | 17 mm | 10 mm (wave pitch) |
| Cracking resistance | 100 | 152 | 148 | 145 | 142 | 103 |
| Uniformity | 100 | 100 | 100 | 100 | 100 | 100 |

### REFERENCE NUMERALS

- 1: LAMINATE SHEET
- 2: SHEET OF THERMOPLASTIC RESIN OR THERMOPLASTIC ELASTOMER COMPOSITION OF THERMOPLASTIC RESIN BLENDED WITH AN ELASTOMER
- 2A: AIR PENETRATION PREVENTING LAYER
- 3: TIE RUBBER LAYER
- 4: VICINITY OF TIP PORTION OF THE SHEET 2 OF THERMOPLASTIC RESIN OR THERMOPLASTIC ELASTOMER COMPOSITION
- 10: INNER LINER LAYER
- 11: TREAD PORTION
- 12: SIDE WALL PORTION
- 13: BEAD PORTION
- 14: CARCASS LAYER
- 15: BELT LAYER
- C: POSITION WHERE CRACKING FREQUENTLY OCCURS IN THE TIE RUBBER LAYER
- D: TIRE CIRCUMFERENTIAL DIRECTION
- E1, E2: EDGE LINES OF THE END PORTIONS IN THE TIRE CIRCUMFERENTIAL DIRECTION OF THE LAMINATED SHEET
- S: LAP SPLICE PORTION
- L: OVERLAP LENGTH

## Claims

1. A pneumatic tire, comprising:
an inner liner layer (10) formed with an overlap splice (S) at end portions in a tire circumferential direction (D) of a laminated sheet (1) in which a film (2) whose main component is thermoplastic resin and tie rubber (3) are laminated, **characterized in that** a laminated sheet (1) with at least one of the end portions in the tire circumferential direction (D) having an edge line formed from straight lines continuously in the tire width direction exhibiting a zigzag shape of a triangular wave form is used as the overlap spliced laminated sheet (1).

2. The pneumatic tire according to claim 1, wherein
the triangular wave form that exhibits the zigzag shape has a line symmetry shape in plan view with a straight line that passes through an apex of the triangular wave form and parallel to the tire circumferential direction (D) as the line of symmetry.

3. The pneumatic tire according to claim 1, wherein
the triangular wave form that exhibits the zigzag shape has a non-line symmetry shape in plan view with a straight line that passes through an apex of the triangular wave form and parallel to the tire circumferential direction (D) as the line of symmetry.

4. The pneumatic tire according to claim 3, wherein
the triangular wave form that exhibits the zigzag shape has a shape in which one side of the triangular wave form is parallel to the tire circumferential direction (D) in plan view.

5. The pneumatic tire according to any one of claims 1 to 4, wherein
both end portions of the overlap spliced laminated sheet (1) have edge lines formed from straight lines continuously in the tire width direction exhibiting the zigzag shape of a triangular wave form.

6. The pneumatic tire according to any one of claims 1 to 5, wherein
the length (L) of the overlap in the tire circumferential direction (D) of the overlap splice portion (S) is not less than 5 mm at the portion where the length is the minimum.

7. The pneumatic tire according to any one of claims 1 to 6, wherein
edge lines (E1, E2) formed from straight lines continuously in the tire width direction exhibiting the zigzag shape of a triangular wave form are formed from a process using laser light.

## Patentansprüche

1. Luftreifen, umfassend:
eine Innenseelenschicht (10), ausgebildet mit einem Überlappungsspleiß (S) an Endabschnitten in Reifenumfangsrichtung (D) eines laminierten Flächengebildes (1), in welchem ein Belag (2), dessen Hauptbestandteil thermoplastisches Harz ist, und Bindekautschuk (3) laminiert sind,
**dadurch gekennzeichnet, dass** ein laminiertes Flächengebilde (1), bei dem mindestens einer der Endabschnitte in Reifenumfangsrichtung (D) eine Kantenlinie aufweist, die aus geraden Linien ausgebildet ist, welche durchgängig in Reifenbreitenrichtung eine Zickzackform in Form von Dreieckswellen aufweisen, als laminiertes Flächengebilde mit Überlappungsspleiß (1) verwendet wird.

2. Luftreifen nach Anspruch 1, wobei
die Zickzackform aufweisende Dreieckswellenform in der Draufsicht eine Liniensymmetrieform mit einer geraden Linie aufweist, die durch einen Scheitelpunkt der Dreieckswellenform und parallel zur Reifenumfangsrichtung (D) als Symmetrieachse verläuft.

3. Luftreifen nach Anspruch 1, wobei
die Zickzackform aufweisende Dreieckswellenform in der Draufsicht keine Liniensymmetrieform mit einer geraden Linie aufweist, die durch einen Scheitelpunkt der Dreieckswellenform und parallel zur Reifenumfangsrichtung (D) als Symmetrieachse verläuft.

4. Luftreifen nach Anspruch 3, wobei
die Zickzackform aufweisende Dreieckswellenform eine Form aufweist, in welcher in der Draufsicht eine Seite der Dreieckswellenform parallel zur Reifenumfangsrichtung (D) verläuft.

5. Luftreifen nach einem der Ansprüche 1 bis 4, wobei beide Endabschnitte des laminierten Flächengebildes mit Überlappungsspleiß (1) Kantenlinien aufweisen, die aus geraden Linien ausgebildet sind, welche durchgängig in Reifenbreitenrichtung die Zickzackform in Form von Dreieckswellen aufweisen.

6. Luftreifen nach einem der Ansprüche 1 bis 5, wobei
die Länge (L) der Überlappung in Reifenumfangsrichtung (D) des Überlappungsspleißabschnitts (S) nicht weniger als 5 mm an dem Abschnitt beträgt, an dem die Länge am geringsten ist.

7. Luftreifen nach einem der Ansprüche 1 bis 6, wobei die aus geraden Linien ausgebildeten Kantenlinien (E1, E2), welche durchgängig in Reifenbreitenrichtung die Zickzackform in Form von Dreieckswellen aufweisen, durch ein Verfahren unter Verwendung von Laserlicht ausgebildet werden.

## Revendications

1. Bandage pneumatique comprenant :
une couche de doublure interne (10) formée avec une jonction par recouvrement (S) au niveau de parties d'extrémité dans une direction circonférentielle de pneu (D) d'une feuille stratifiée (1) dans laquelle un film (2) dont le composant principal est une résine thermoplastique et du caoutchouc de liaison (3) sont stratifiés,
**caractérisé en ce qu'**une feuille stratifiée (1) avec au moins une des parties d'extrémité dans la direction circonférentielle de pneu (D) ayant une ligne de bord formée par des lignes droites en continu dans la direction de la largeur du pneu présentant une forme en zigzag d'une forme d'onde triangulaire est utilisée en tant que feuille stratifiée jointe par recouvrement (1).

2. Bandage pneumatique selon la revendication 1, dans lequel
la forme d'onde triangulaire qui présente la forme en zigzag a une forme de symétrie linéaire en vue en plan, avec une ligne droite qui passe à travers un sommet de la forme d'onde triangulaire et parallèle à la direction circonférentielle de pneu (D) comme ligne de symétrie.

3. Bandage pneumatique selon la revendication 1, dans lequel
la forme d'onde triangulaire qui présente la forme en zigzag a une forme de symétrie non linéaire en vue en plan, avec une ligne droite qui passe à travers un sommet de la forme d'onde triangulaire et parallèle à la direction circonférentielle de pneu (D) comme ligne de symétrie.

4. Bandage pneumatique selon la revendication 3, dans lequel
la forme d'onde triangulaire qui présente la forme en zigzag a une forme dans laquelle un côté de la forme d'onde triangulaire est parallèle à la direction circonférentielle de pneu (D) en vue en plan.

5. Bandage pneumatique selon l'une quelconque des revendications 1 à 4, dans lequel les deux parties d'extrémité de la feuille stratifiée jointe par recouvrement (1) ont des lignes de bord formées à partir de lignes droites en continu dans la direction de la largeur du pneu, présentant la forme en zigzag d'une forme d'onde triangulaire.

6. Bandage pneumatique selon l'une quelconque des revendications 1 à 5, dans lequel
la longueur (L) du recouvrement dans la direction circonférentielle de pneu (D) de la partie de jonction par recouvrement (S) n'est pas inférieure à 5 mm au niveau de la partie où la longueur est minimale.

7. Bandage pneumatique selon l'une quelconque des revendications 1 à 6, dans lequel les lignes de bord (E1, E2) formées à partir de lignes droites en continu dans la direction de la largeur de pneu présentant la forme en zigzag d'une forme d'onde triangulaire sont formées à partir d'un procédé utilisant de la lumière laser.
